# EUROPÄISCHE PATENTSCHRIFT

(11) **EP 2 507 324 B1**
(45) Veröffentlichungstag und Bekanntmachung des Hinweises auf die Patenterteilung: **02.07.2014**
(21) Anmeldenummer: 10788297.9
(22) Anmeldetag: 02.12.2010
(51) Int. Cl.: C09D 5/00

(54) **KORROSIONSSCHUTZPIGMENTE MIT POSITIVEM ZETA-POTENTIAL**
CORROSION PROTECTION PIGMENTS HAVING A POSITIVE ZETA POTENTIAL
PIGMENTS ANTICORROSION AYANT UN POTENTIEL ZÊTA POSITIF

(30) Priorität: 03.12.2009 US 266184 P; 03.12.2009 EP 09177891
(43) Veröffentlichungstag der Anmeldung: 10.10.2012
(73) Patentinhaber: BASF SE, 67056 Ludwigshafen (DE)
(72) Erfinder: HÜFFER, Stephan, 67063 Ludwigshafen (DE); WITTELER, Helmut, 67157 Wachenheim (DE); NICOLINI, Fabio, 67112 Mutterstadt (DE); SUGIHARTO, Albert Budiman, 68161 Mannheim (DE)
(86) Internationale Anmeldenummer: PCT/EP2010/068724
(87) Internationale Veröffentlichungsnummer: WO 2011/067329

(56) Entgegenhaltungen:
- EP-A1- 1 978 055
- EP-A1- 2 226 364
- WO-A1-01/12740
- WO-A2-03/103020
- US-A1- 2006 073 336
- US-A1- 2006 231 487
- US-A1- 2008 058 229

## Beschreibung

Die vorliegende Erfindung betrifft die Verwendung von oxidischen Nanopartikeln mit einer mittleren Teilchengröße von 2 bis 2000 nm in Kombination mit mindestens einem polykationischen Polymer als Korrosionsschutz für metallische Oberflächen. Die vorliegende Patentanmeldung beansprucht die Priorität der anhängigen US-Provisional Patentanmeldung Nr, 61/266,184, eingereicht am 3. Dezember 2009, die hiermit durch Bezugnahme vollständig Bestandteil der vorliegenden Beschreibung ist.

Der Schutz von metallischen Oberflächen vor Korrosion ist ein schon sehr lange und intensiv untersuchtes Gebiet, da die durch Korrosion verursachten Schäden wirtschaftlich sehr bedeutend sind und regelmäßig ein hoher Aufwand zur Vorsorge sowie zur Beseitigung der Schäden betrieben werden.

Die Korrosion an Metallen lässt sich dabei im Wesentlichen auf chemische und elektrochemische Korrosionsreaktionen zurückführen. Korrosionsschutzpigmente greifen auf verschiedenen Wegen in den Korrosionsprozess ein. Sie wirken physikalisch durch Verlängerung des Diffusionsweges von Wasser, Sauerstoff und weiterer korrosiv wirkender Substanzen von der Beschichtungsoberfläche an die Metalloberfläche. Elektrochemisch wirkende Korrosionsschutzpigmente passivieren die Metalloberfläche.

Besonders wirksame Korrosionsschutzpigmente basieren auf Verbindungen, die heutzutage wegen ihrer die menschliche Gesundheit schädigenden und umwelttoxikologischen bedenklichen Eigenschaften nicht mehr oder nur noch sehr beschränkt eingesetzt werden, wie beispielsweise bleihaltige und chromathaltige Korrosionsschutzpigmente. Auch die Phospatierung von metallischen Oberflächen ist in dieser Hinsicht wegen der dabei für eine gute Phospatierung benötigten Nickelzusätze aus ökologischen Gründen weniger erwünscht.

Es ist bekannt, dass Nanopartikel beispielsweise aus Siliziumdioxid, Titandioxid, Eisenoxiden oder Manganoxiden eine korrosionsinhibierende Wirkung zeigen. Diese Wirkung der Nanopartikel ist jedoch nicht von Dauer, der Korrosionsprozess wird nur eine gewisse Zeit verzögert und die als Korrosionsschutz eingesetzten Nanopartikel verlieren nach Einsetzen des Korrosionsprozesses relativ rasch an Wirkung.

Aufgabe der vorliegenden Erfindung ist es, einen verbesserten Korrosionsschutz bereitzustellen, der ohne umwelttoxikologisch als problematisch bekannte Verbindungen beispielsweise auf Basis von Blei, Chrom oder Nickel auskommt.

Diese Aufgabe wird erfindungsgemäß gelöst durch die Verwendung von oxidischen Nanopartikeln mit einer mittleren Teilchengröße von 2 bis 2000 nm (a) in Kombination mit mindestens einem polykationischen Polymer (b) zum Schutz von metallischen Oberflächen vor Korrosion.

Die erfindungsgemäß mit einer Kombination von oxidischen Nanopartikeln und mindestens einem polykationischen Polymer geschützten metallischen Oberflächen zeigen einen höheren Widerstand gegen Korrosion als metallische Oberflächen, die nur mit den oxidischen Nanopartikeln geschützt sind. Der positive Einfluss der polykationischen Polymere auf den Korrosionsschutz von metallischen Oberflächen durch oxidische Nanopartikel beruht auf der Erhöhung der Zeta-Potentiale der Nanopartikel durch die Gegenwart der polykationischen Polymere. Infolge einsetzender Korrosionsprozesse erhöht sich bei vielen Substraten durch die kationische Sauerstoffreduktion der pH-Wert auf etwa 9 bis 13. Die anorganischen Nanopartikel werden infolge der negativen Aufladung weniger stark an die in der Regel ebenfalls negativ geladenen, metallischen Substratoberflächen gebunden. Die polykationischen Polymere lagern sich an der Oberfläche der Nanopartikel an und erhöhen deren Zeta-Potential. Dadurch wird die Adsorption der Nanopartikel an der metallischen Substratoberfläche auch bei Erhöhung des pH-Wertes infolge der stattfindenden Korrosionsprozesse stabilisiert. Dieser Effekt ist unabhängig davon, ob die Nanopartikel oder die polykationischen Polymere in einem polaren Dispersionsmedium wie Wasser oder einem unpolaren Dispersionsmedium wie Petroleum aufgebracht werden. Auch bei Verwendung in einem Bindemittel wird ein deutlich verbesserter Korrosionsschutz von metallischen Oberflächen erhalten.

Im Folgenden wird die vorliegende Erfindung im Einzelnen erläutert.

Üblicherweise werden die oxidischen Nanopartikel (a) und das mindestens eine polykationische Polymer (b) gemeinsam in einer Formulierung enthaltend (a) und (b) verwendet.

Die oxidischen Nanopartikel weisen eine mittlere Teilchengröße von 2 bis 2000 nm, bevorzugt von 5 bis 1000 nm und besonders bevorzugt von 5 bis 200 nm auf. Die mittlere Partikelgröße wird üblicherweise mittels AFM und TEM bestimmt.

Die oxidischen Nanopartikel (a) können aus den oxidischen Materialien gewählt werden, die dem Fachmann zur Herstellung von Nanopartikeln als geeignet bekannt sind. Dabei handelt es sich insbesondere um anorganische Oxide von Metallen und Halbmetallen. Erfindungsgemäß bevorzugt werden die oxidischen Nanopartikel (a) ausgewählt aus den Oxiden Siliziumdioxid, Titandioxid, Eisenoxiden einschließlich Fe(II)-,Fe(III)-und Fe(II)-Fe(III)-Mischoxiden, Titandioxid, Zirkoniumdioxid, Tantaloxid, Manganoxiden der Oxidationsstufen III und IV sowie Mischoxide und Mischungen davon, beispielsweise Titanate wie BaTiO₃. Besonders bevorzugt werden erfindungsgemäß Nanopartikel aus Siliziumdioxid, Titandioxid und Zinkoxid ausgewählt.

Diese Nanopartikel können durch verschiedene, dem Fachmann bekannte Verfahren hergestellt werden. Üblicherweise werden die Nanopartikel durch Mahlschritte, Reaktionen in der Gasphase, in einer Flamme, durch Kristallisation, Fällung, Sol-Gel-Prozesse, im Plasma oder durch die Sublimation erzeugt. Die Messung der Größe der Nanopartikel erfolgt vorteilhaft mittels elektronenmikroskopischer Analyse, beispielsweise mittels AFM oder TEM. Für die Erfindung geeignete Nanopartikel sind auch kommerziell erhältlich beispielsweise nanoskaliges Siliziumdioxid unter dem Handelsnamen Aerosil^{®}von der Firma Evonik.

Die erfindungsgemäß zu verwendenden oxidischen Nanopartikel sind in der Regel mit Wasser beziehungsweise polaren Lösungsmittel kompatibel. Zur Anwendung in unpolaren Medien wie beispielsweise Petroleum kann die Behandlung der oxidischen Nanopartikel mit einer die Oberfläche hydrophobierenden Verbindung vorteilhaft sein. Für die hydrophobe Modifizierung der oxidischen Nanopartikel geeignete Substanzen sind dem Fachmann bekannt. Sie kann beispielsweise durch Behandeln mit Hexamethylendisilazan, Octamethylcycloterasiloxan, Stearinsäure oder Polypropylenoxid geschehen. Entsprechend hydrophob modifizierte Silicananopartikel sind auch kommerziell erhältlich, beispielsweise bei der Firma Evonik. Gemäß einer bevorzugten Ausführungsform der Erfindung werden hydrophob modifizierte Nanopartikel eingesetzt. Dies gilt insbesondere, wenn die oxidischen Nanopartikel in einem unpolaren Auftragungsmittel oder Dispersionsmedium eingesetzt werden.

Gemäß einer anderen bevorzugten Ausführungsform der vorliegenden Erfindung werden die oxidischen Nanopartikel unmodifiziert verwendet, besonders, wenn das Auftragungsmittel beziehungsweise Dispersionsmedium polar ist, insbesondere bei Verwendung von Wasser als Auftragungsmittel oder Dispersionsmedium.

Erfindungsgemäß werden die oxidischen Nanopartikel in Kombination mit mindestens einem polykationischen Polymer verwendet. Polykationisch bedeutet im Rahmen der Erfindung, dass das Polymer eine Mindestladungsdichte größer 1 mequ/g aufweist; bevorzugt von 5 bis 25 mequ/g und besonders bevorzugt von 10 bis 20 mequ/g, jeweils gemessen bei einem pH-Wert von 4 bis 5.Erfindungsgemäß können alle Polymere eingesetzt werden, die entweder in der Polymerkette freie oder alkylsubstituierte Aminogruppen oder quartäre Ammoniumgruppen enthalten oder an die Polymerkette direkt oder über Zwischenglieder gebundene sekundäre oder tertiäre Aminogruppen oder quartäre Ammoniumgruppen tragen. Diese Amino- oder quartären Ammoniumgruppen können auch Glieder von 5- oder 6-gliedrigen Ringsystemen sein, zum Beispiel von Morpholin-, Piperidin-, Piperazin- oder Imidazol-Ringen. Erfindungsgemäß kann das kationische Polymer ausgewählt sein aus Polyamiden, Polyiminen und Polyaminen, Polydiallyldimethylammoniumchlorid, Polyvinylamin, Polyvinylpyridin, Polyvinylimidazol und Polyvinylpyrrolidon sowie natürlichen und halbsynthetischen Polymeren einschließlich kationisch modifizierter Stärke.

Die erfindungsgemäß zu verwendenden polykationischen Polymere weisen bevorzugt ein zahlengemitteltes Molekulargewicht im Bereich von 500 bis 2 000 000 g/mol, bevorzugt 750 g/mol bis 100 000 g/mol auf. Bevorzugt wird als polykationisches Polymer (b) Polyethylenimin eingesetzt, wobei das Polyethylenimin bevorzugt ein zahlengemitteltes Molekulargewicht von 500 g/mol bis 125 000 g/mol, und besonders bevorzugt 750 g/mol bis 100 000 g/mol aufweist.

Die polykationischen Polymere können linear, verzweigt oder als so genannte Dendrimere vorliegen, vorzugsweise liegen sie als Dendrimere vor. Besonders bevorzugt wird erfindungsgemäß Polyethylenimin, das als Dendrimer vorliegt, eingesetzt. Solche Polyethylenimine sind beispielsweise unter dem Handelname Lupasol^{®} von der BASF SE erhältlich. Eine genauere Beschreibung derartiger Polyimine findet sich beispielsweise in Macromolecules Vol. 2, H.-G. Elias, 2007 Vol. 2, Seiten 447 bis 456.

Gemäß einer besonders bevorzugten Ausführungsform der Erfindung wird als das mindestens eine polykationische Polymer Polyethylenimin mit einem zahlengemitteltem Molekulargewicht von 500 g/mol bis 125 000 g/mol, bevorzugt von 750 g/mol bis 100 000 g/mol eingesetzt, das als Dendrimer vorliegt.

Erfindungsgemäß wird mindestens ein polykationisches Polymer (b) eingesetzt, es kann somit ein polykationisches Polymer eingesetzt werden als auch Mischungen aus zwei, drei oder mehr polykationischen Polymeren.

Die Kombination aus oxidischen Nanopartikeln (a) und mindestens einem polykationischen Polymer (b) ist schon in geringen Konzentrationen ein sehr wirksamer Korrosionsschutz. Das mindestens eine polykationische Polymer (b) wird dabei bevorzugt im Unterschuss eingesetzt, bezogen auf die Menge oxidischer Nanopartikel. Erfindungsgemäß bevorzugt beträgt das Gewichtsverhältnis des mindestens einen polykationischen Polymeren (b) zu oxidischen Nanopartikeln (a) 1:1000 bis 1:1, bevorzugt 1:100 bis 1:2.

In der Regel steigt, speziell bei verzinkten Oberflächen oder Aluminium, der pH-Wert infolge der Korrosionsprozesse an, üblicherweise auf pH-Werte größer 9,5. Dadurch lädt sich die Oberfläche der Nanopartikel negativ auf, das heißt, das Zeta-Potential der Nanopartikel wird negativ und es kommt zur Desorption der Nanopartikel von der ebenfalls negativ polarisierten (geladenen) Metalloberfläche. Durch die Verwendung der oxidischen Nanopartikel in Kombination mit mindestens einem polykationischen Polymer wird das Zeta-Potential der oxidischen Nanopartikel in Gegenwart des mindestens einen polykationischen Polymers im pH-Wert-Bereich von 5 bis 13, bevorzugt im pH-Wert-Bereich von 7 bis 11 auf mindestens -2, bevorzugt auf mindestens -1 und besonders bevorzugt auf mindestens 0 angehoben, gemessen bei 25°C.

Die oxidischen Nanopartikel in Kombination mit dem mindestens einen polykationischen Polymer werden üblicherweise mithilfe eines Auftragungsmittels auf die zu schützende Oberfläche aufgebracht. Vorzugsweise werden die oxidischen Nanopartikel (a) und das mindestens eine polykationische Polymer (b) in einem Auftragungsmittel in einer Gesamtkonzentration von mindestens 0,1 Gew.-%, bezogen auf die Gesamtmenge von Auftragungsmittel, (a) und (b), eingesetzt, bevorzugt in einer Gesamtkonzentration von mindestens 0,5 Gew.-%. Üblicherweise werden die oxidischen Nanopartikel (a) und das mindestens eine polykationische Polymer (b) in einer Gesamtkonzentration von höchstens 3 Gew.-%, bevorzugt von höchstens 2,5 Gew.-%, bezogen auf die Gesamtmenge von Auftragungsmittel, (a) und (b) eingesetzt, da sich eine Verbesserung des Korrosionsschutzeffektes bei Erhöhung der Gesamtkonzentration von (a) und (b) nicht erreichen lässt, so dass aus ökonomischen Gründen höhere Konzentrationen unüblich sind.

Erfindungsgemäß können durch die oxidischen Nanopartikel (a) in Kombination mit dem mindestens einen polykationischen Polymer (b) alle metallischen Oberflächen geschützt werden, die üblicherweise durch Korrosion geschädigt werden können. Dazu gehören beispielsweise Stahloberflächen und verzinkte Oberflächen, Oberflächen aus Al und Mg sowie Legierungen beispielsweise auf Basis von ZnMg.

Weiterer Gegenstand der vorliegenden Erfindung ist ein Verfahren zum Schutz von metallischen Oberflächen vor Korrosion, umfassend die Schritte:
i) Bereitstellen einer Formulierung enthaltend oxidische Nanopartikel (a) und mindestens ein polykationisches Polymer (b) wie vorstehend beschrieben und ein Auftragungsmittel,
ii) Aufbringen der Formulierung auf die zu schützende metallische Oberfläche und
iii) ggf. Trocknen und/oder Wärmebehandlung der Oberfläche.

In Schritt (i) des erfindungsgemäßen Verfahrens wird eine Formulierung bereitgestellt, die oxidische Nanopartikel (a) sowie mindestens ein polykationisches Polymer (b) enthält, wie sie vorhergehend ausführlich beschrieben wurden. Das Gewichtsverhältnis des mindestens einen polykationischen Polymeren (b) zu oxidischen Nanopartikeln (b) liegt bevorzugt bei 1:1 000 bis 1:1, besonders bevorzugt bei 100:1 bis 1:2. Weiterhin enthält die Formulierung ein Auftragungsmittel. Das Auftragungsmittel dient als Mittel, die oxidischen Nanopartikel (a) und das mindestens eine polykationische Polymer (b) auf die zu schützende Oberfläche aufzubringen. Dieses Auftragungsmittel ist vorzugsweise fließfähig. Bei dem Auftragungsmittel kann es sich um einfache Lösungsmittel wie Wasser, Petroleum, Alkohole und ähnliches handeln, als Auftragungsmittel können jedoch auch Beschichtungssysteme eingesetzt werden, die bereits Bindemittel und ggf. weitere, für diesen Zweck übliche Additive enthalten.

Die oxidischen Nanopartikel sowie das mindestens eine polykationische Polymer werden in dem Auftragungsmittel gelöst beziehungsweise dispergiert. Die Wahl des Auftragungsmittels zur Herstellung der Formulierung erfolgt nach den Vorgaben der Endanwendung und erstreckt sich auf lösungsmittelbasierte/oleophile und auf wasserbasierte Systeme. Insofern können alle bekannten Lösungsmittel wie Wasser, Alkohole, Glykole, Ester, Ketone, Amide, Kohlenwasserstoffe wie synthetische Öle und Wachse, als auch natürliche Systeme wie Leinöl, modifizierte Leinöle (Alkydharze) und natürliche Wachse verwendet werden. Dabei lagern sich die polykationischen Polymere auf der Oberfläche der oxidischen Nanopartikel an. Bei Verwendung eines Bindemittelsystems als Auftragungsmittel ist es auch möglich, zunächst eine Mischung aus den oxidischen Nanopartikeln und dem mindestens einen polykationischen Polymer in einem Lösungsmittel herzustellen und diese Mischung anschließend in das Bindemittelsystem einzubringen.

In Schritt ii) wird die Formulierung auf die zu schützende metallische Oberfläche aufgebracht. Die Formulierung kann durch bekannte Verfahren wie Tauchen, Sprühen, Rakeln, Streichen, Walzen und so weiter aufgebracht werden.

Weiterer Gegenstand der vorliegenden Erfindung ist ein Korrosionsschutzmittel enthaltend:
0,1 bis 3 Gew.-% oxidische Nanopartikel mit einer mittleren Teilchengröße von 1 bis 2000 nm (a) und mindestens ein polykationisches Polymere (b), wobei das Gewichtverhältnis von (b) zu (a) bei 1:1000 bis 1:1 liegt,
0,1 bis 30 Gew.-% mindestens eines Emulgators,
5 bis 90 Gew.-% flüssiges Dispersionsmedium,
0 bis 5 Gew.-% mindestens eines anorganischen Salzes ausgewählt aus Phosphaten
und Fluoriden von Li, Na, K, Mg, Ca, Ba, Zn, Mn, Fe, Ti und/oder Zr
bezogen auf die Gesamtmenge des Korrosionsschutzmittels,

Falls das mindestens eine anorganische Salz in dem Korrosionsschutzmittel enthalten ist, beträgt seine Mindestkonzentration 0.1 Gew.-%, bezogen auf die Gesamtmenge des Korrosionsschutzmittels.

Die in dem Korrosionsschutzmittel enthaltenen oxidischen Nanopartikel (a) und das darin enthaltene mindestens eine polykationische Polymer (b) sind vorstehend beschrieben. Bevorzugt enthält das erfindungsgemäße Korrosionsschutzmittel Silizumdioxid als oxidische Nanopartikel und Polyethylenimin als polykationisches Polymer Besonders bevorzugt wird Polyethylenimin mit einem zahlengemittelten Molekulargewicht von 500 g/mol bis 125000 g/mol besonders bevorzugt von 750 g/mol bis 100 000 g/mol eingesetzt. Ganz besonders bevorzugt wird Polyethylenimin eingesetzt, das als Dendrimer vorliegt.

Als flüssiges Dispersionsmedium können die vorstehend als Auftragungsmittel genannten Verbindungen und Systeme eingesetzt werden.

Weiterer Gegenstand der vorliegenden Erfindung sind metallische Oberflächen die unter der erfindungsgemäßen Verwendung von oxidischen Nanopartikeln (a) in Kombination mit mindestens einem polykationischen Polymer (b), wie vorstehend beschrieben, vor Korrosion geschützt sind, herstellbar gemäß dem erfindungsgemäßen Verfahren zum Schutz von metallischen Oberflächen vor Korrosion, umfassend drei Schritte, wie vorangehend erläutert.

Im Folgenden wird die Erfindung anhand von Beispielen ausführlich erklärt.

### Beispiele 1 bis 7

Als oxidische Nanopartikel wurden hydrophobisierte Silizumdioxidpartikel mit einer mittleren Teilchengröße von 8 bis 10 nm (Herstellerangabe, Handelsname Aerosil^{®} R 106 der Firma Evonik) verwendet. Als polykationisches Polymer wurde Polyethylenimin mit einem Molekulargewicht Mn von 800, 2000, 25.000 g/mol und einer kationischen Ladungsdichte von 16 bis 17 mequ/g (Lupasol^{®} FG, G 35 und WF der BASF SE) eingesetzt.

1000g Paraffinöl (Tudalen^{®} 3036, H&R Vertrieb GmbH, mit einer Dichte 0,86 g/ml und einer kinematische Viskosität von 17 mm2/s (40°C, DIN 51562)) werden in einem 2 l Gefäß vorgelegt und 50 g hydrophobisierte Silizumdioxidpartikel zugegeben. Unter Rühren wird auf 60°C erwärmt, bis eine klare Lösung beziehungsweise eine Dispersion erhalten wird.

Für die Bespiele 2 bis 7 wurden jeweils 150 g der Lösung/Dispersion bei 40°C mit unterschiedlichen Mengen des kationischen Polymers versetzt.

### Beispiele 8 bis 10

Als oxidische Nanopartikel wurden Zinkoxidteilchen (VP AdNano Z 805 der Firma Evonik) mit einer mittleren Teilchengröße von 12 nm und einer BET-Oberfläche > 20 m²/g eingesetzt. Als polykationisches Polymer wurde Polyethylimin mit einem Molekulargewicht Mn von 800 beziehungsweise 2000 g/mol verwendet. 25 g Zinkoxidteilchen wurden mit 500 g Paraffinöl (entsprechend Beispiel 1) unter Rühren auf 60°C erwärmt und eine Dispersion erhalten.

### Beispiele 11 bis 16

Als oxidische Nanopartikel wurden Silizumdioxidpartikel (Aerosil^{®} 200 der Firma Evonik) mit einer mittleren Teilchengröße von 12 nm und einer BET-Oberfläche von 170 +/- 125 m²/g (Herstellerangaben) verwendet, als polykationisches Polymer wurden die unter den Beispielen 1 bis 7 beschriebenen Polyethylenimine eingesetzt. Pro Beispiel wurden 10 g Nanopartikel in 100 ml entionisiertes Wasser eingebracht. Die Dispersionen wurden jeweils mit 0,5 g, 0,75 g, 1,0 g, bzw. 2,0 g Polyethylenimin, wie unter Beispiel 1 beschrieben, versetzt.

### Beispiele 17 bis 22

Jeweils 60 g der Mischungen aus den Beispielen 11 bis 16 wurden bei RT unter Rühren portionsweise in jeweils 120 ml einer 50 %-igen Poly(styrolacrylat)-Dispersion (Acronal^{®} S 760 der BASF SE) eingetragen und 20 Minuten gerührt.

Die genannten Angaben über eingesetzte Mengen und Molekulargewichte des jeweiligen Polyethylenimins sind für die Beispiele 1 bis 16 in den Tabellen 1 bis 3 zusammengefasst. Die Ladungsdichte des Polyethylenimins wurde jeweils bei einem pH-Wert von 4 bis 5 bestimmt und betrug für alle eingesetzten PEI 16 bis 17 mequ/g.

### B) Bestimmung der Zeta-Potentiale

Für die Beispiele 1 bis 7 und 11 bis 16 wurden die Zeta-Potentiale bestimmt. Die Bestimmung der Zeta-Potentiale erfolgte mit dem Zetasizer nano der Firma Malvern, wobei das Potential der nicht-wässrigen Formulierungen im Analogieschluss zu den wässrigen Formulierungen erfolgte, indem bei gleichen Konzentrationen von identischen Oberflächenbelegungen ausgegangen wurde. Die Potentialmessung erfolgte stets, das heißt auch mit den hydrophobierten Nanopartikeln, in einem wässrigen Medium. Die Proben wurden zuerst in Wasser eingebracht. Hierzu wurden die Pigmente im Verhältnis 1:3 mit Wasser vermengt, gefolgt von den in Tabelle 1 aufgeführten Mengen an Polyethylenimin (mgPEI/gNanopartikel für die Beispiele 1 bis 7 und 11 bis 16). Bei den Proben aus den Beispielen 1 bis 7 erforderte die Prozedur eine intensivere Durchmischung über einen Zeitraum von 30 Minuten. Man erhielt aber auch im Falle der oberflächenmodifizierten Pigmente geeignete Dispersionen.

Für die Einzel-Messungen wurden dann jeweils 1 g dieses Ansatzes in 40 ml 10 mmol/IKCI verdünnt. Von diesen Proben wurde dann der pH-Wert bestimmt und die Mobilität gemessen.

Die Messungen wurden bei dem pH-Wert gestartet, den die Proben nach dem Verdünnen aufwiesen. Die pH-Wert-Einstellung erfolgte durch HCl beziehungsweise NaOH, um die Messungen bei pH 7, 9 und 11 durchführen zu können.

In den Tabellen 1 und 3 sind die verwendeten Polyethylenimine, deren Konzentrationen sowie die gemessenen Zeta-potentiale der Beispiele 1 bis 7 (Tab.1) und 11 bis 16 (Tab.3) aufgeführt.

**Tabelle 1: hydrophobisierte SiO₂-Nanopartikel in Paraffinöl**

| | PEI, Mn [g/mol] | Konz. PEI [g/l] | Nano-partikel | mg PEI/g Nano- partikel | Zeta-Potential [(µm/s]/(V/cm)] | | |
|---|---|---|---|---|---|---|---|
| | | | | | pH 7 | pH 9 | pH 11 |
| Beispiel 1 (Vergl.) | - | 0 | Si0₂, Aerosil R 106 | 0 | -0,8 | -2,1 | -3,8 |
| Beispiel 2 | 800 | 0,86 | Si0₂, Aerosil R 106 | 20 | +2,1 | +1,0 | -1,7 |
| Beispiel 3 | 800 | 4,3 | Si0₂, Aerosil R 106 | 100 | +2,8 | +2,6 | -0,2 |
| Beispiel 4 | 800 | 8,53 | Si0₂, Aerosil R 106 | 200 | +3,4 | +3,0 | +0,3 |
| Beispiel 5 | 800 | 16,9 | Si0₂, Aerosil R 106 | 400 | +3,5 | +3,0 | +0,5 |
| Beispiel 6 | 2.000 | 8,53 | Si0₂, Aerosil R 106 | 200 | +3,1 | +2,9 | +0,2 |
| Beispiel 7 | 25.000 | 8,53 | Si0₂, Aerosil R 106 | 200 | +2,9 | +2,6 | +0,1 |

**Tabelle 2: Zinkdioxidpartikel in Paraffinöl**

| | PEI, Mn [g/mol] | Konz. PEI [g/l] | Nano- partikel | mg PEI/g Nano-partikel | Zeta-Potential [(µm/s]/(V/cm)] |
|---|---|---|---|---|---|
| Beispiel 8 | 800 | 4,3 | ZnO VP AdNano Z 805 | | - |
| Beispiel 9 | 2000 | 4,3 | ZnO VP AdNano Z 805 | | - |
| Beispiel 10 | - | 0 | ZnO VP AdNano Z 805 | | - |

**Tabelle 3: Nichtmodifizierte Siliziumdioxidpartikel in Wasser**

| | PEI, Mn [g/mol] | Konz. PEI [g/l] | Nano- partikel | mg PEI /g Nano- partikel | Zeta-Potential [(µm/s]/(V/cm)] | | |
|---|---|---|---|---|---|---|---|
| | | | | | pH 7 | pH 9 | pH 11 |
| Beispiel 11 | - | 0 | Si0₂, Aerosil 200 | 0 | -1,8 | -3,0 | -3,8 |
| Beispiel 12 | 800 | 2,27 | Si0₂, Aerosil 200 | 50 | +2,3 | +1,0 | -1,1 |
| Beispiel 13 | 800 | 3,41 | Si0₂, Aerosil 200 | 75 | +3,1 | +2,6 | +0,2 |
| Beispiel 14 | 800 | 4,55 | Si0₂, Aerosil 200 | 100 | +3,6 | +3,0 | +0,3 |
| Beispiel 15 | 800 | 9,1 | Si0₂, Aerosil 200 | 200 | +3,9 | +3,4 | +0,6 |
| Beispiel 16 | 2000 | 4,55 | Si0₂, Aerosil 200 | 200 | +3,7 | +3,3 | +0,7 |

Sowohl für die hydrophobisierten Siliziumdioxidpartikel als auch die nicht modifizierten Siliziumdioxidpartikel führt die Zugabe unterschiedlicher Polyethylenimine in unterschiedlichen Konzentrationen zu einer Erhöhung des Zeta-Potentials auf mindestens - 1,7 in einem pH-Wert-Bereich von 7 bis 11 im Vergleich zu dem Zeta-Potential der Siliziumdioxidteilchen in Abwesenheit des Polyethylenimins von -0,8 bis -3,8.

### C) Korrosionstests

Mit den Formulierungen aus den Beispielen 1 bis 22 wurden jeweils 4 Bleche Gardobond^{®} OC (Stahlbleche) und Gardobond^{®} OMBZ (elektrolytisch verzinkte Stahlbleche) mit einer Größe von 10,5 x 19 cm der Firma Chemetall per Rakel einseitig aufgetragen. Der Auftrag wurde gravimetrisch kontrolliert (nass), wobei ein Bereich von 0,9-1,4 g/m² eingehalten wurde. Die Bleche mit den wässrigen Formulierungen wurden bei 60°C getrocknet. Die mit Paraffindispersion beschichteten Bleche wurden der gleichen Wärmebehandlung wie die mit wässriger Dispersion beschichteten Bleche unterzogen.

Der Korrosionsschutz wurde nach zwei unterschiedlichen Verfahren untersucht. Jeweils zwei Bleche wurden nach dem Klimawechseltest (DIN ISO 9227, 3 Wochen) und mit dem Salzsprühtest gemäß DIN 50017 getestet. Bei der Prüfung in der Salzkammer wurde bei den Stahlblechen der Zeitpunkt bis zum Auftreten von Korrosion (Rotrost) notiert und eine Bewertung gemäß Rostindex RI nach ISO 10289 nach 6 h vorgenommen. Bei den elektrolytisch verzinkten Blechen wurde nach 3 Tagen in der Salzkammer der Rostindex RI bestimmt. Der Bewertungsgrad für den Restindex nach ISO 10289 ist in Tabelle 4 aufgeführt.

In den Tabellen 5 bis 8 sind jeweils die gemittelten Werte der zwei Bleche angegeben.

**Tabelle 4: Rostindex RI nach ISO 10289**

| Fehlerfläche % | Bewertungsgrad R_{ß} oder R_{A} | Fehlerfläche % | Bewertungsgrad R_{ß} oder R_{A} |
|---|---|---|---|
| kein Fehler | 10 | 2,5 < A ≤ 5,0 | 5 |
| 0 < A ≤ 0,25 | 9 | 5,0 < A ≤ 10 | 4 |
| 0,25 < A ≤ 0,5 | 8 | 10 < A ≤ 25 | 3 |
| 0,5 < A ≤ 1,0 | 7 | 25 < A ≤ 50 | 2 |
| 1,0 < A ≤ 2,5 | 6 | 50 < A ≤ 75 | 1 |
| 2,5 < A ≤ 5,0 | 5 | 75 < A | 0 |

**Tabelle 5: Ergebnisse der Korrosionstests für die Beispiele 1 bis 7 (hydrophobierte Siliziumdioxidpartikel in Paraffinöl)**

| | RI nach Klimawechseltest, Stahlblech | RI nach Salzsprühtest, Stahlblech Zeit bis Korrosion [h] | RI nach Salzsprühtest (6 h), Stahlblech | RI nach Klimawechseltest, verzinktes Stahlblech | RI nach Salzsprühtest (72h), verzinktes Stahlblech |
|---|---|---|---|---|---|
| Beispiel 1 (Vergleich) | 1,5 | 0,5 | 0 | 3,5 | 1 |
| Beispiel 2 | 3 | 1 | 1 | 4 | 3,5 |
| Beispiel 3 | 3,5 | 1,5 | 1 | 5 | 4 |
| Beispiel 4 | 4 | 1,5 | 2 | 6 | 4 |
| Beispiel 5 | 4,5 | 2,5 | 2 | 5,5 | 5 |
| Beispiel 6 | 4,5 | 2 | 2 | 6 | 4 |
| Beispiel 7 | 3,5 | 2 | 2,5 | 5 | 4 |

**Tabelle 6: Ergebnisse der Korrosionstests für die Beispiele 8 bis 10 (Zinkoxidteilchen in Paraffinöl)**

| | RI nach Klimawechseltest, Stahlblech | RI nach Salzsprühtest, Stahlblech Zeit bis Korrosion [h] | RI nach Salzsprühtest (6 h), Stahlblech | RI nach Klimawechseltest, verzinktes Stahlblech | RI nach Salzsprühtest (72h), verzinktes Stahlblech |
|---|---|---|---|---|---|
| Beispiel 8 | 3 | 2 | 3 | 4 | 3,5 |
| Beispiel 9 | 3 | 2 | 2,5 | 3 | 3 |
| Beispiel 10 (Vergleich) | 1,5 | 0,5 | 1 | 2 | 1,5 |

**Tabelle 7: Ergebnisse der Korrosionstests für die Beispiele 11 bis 16 (Nichtmodifizierte Siliziumdioxidpartikel in Wasser)**

| | RI nach Klimawechseltest, Stahlblech | RI nach Salzsprühtest, Stahlblech Zeit bis Korrosion [h] | RI nach Salzsprühtest (6 h), Stahlblech | RI nach Klimawechseltest, verzinktes Stahlblech | RI nach Salzsprühtest (72h), verzinktes Stahlblech |
|---|---|---|---|---|---|
| Beispiel 11 (Vergleich) | 1 | 1 | 1 | 2,5 | 1,5 |
| Beispiel 12 | 2,5 | 2,5 | 2 | 4 | 2,5 |
| Beispiel 13 | 3 | 2 | 2 | 4 | 3,5 |
| Beispiel 14 | 2,5 | 3 | 3 | 5 | 4 |
| Beispiel 15 | 3 | 3 | 2 | 5 | 5 |
| Beispiel 16 | 4 | 3 | 2,5 | 5,5 | 5 |

**Tabelle 8: Ergebnisse der Korrosionstests aus den Beispielen 17 bis 26 (Nichtmodifizierte Siliziumdioxidpartikel als wässrige Dispersion in Bindemittel)**

| | RI nach Klimawechseltest, Stahlblech | RI nach Salzsprühtest, Stahlblech Zeit bis Korrosion [h] | RI nach Salzsprühtest (6 h), Stahlblech | RI nach Klimawechseltest, verzinktes Stahlblech | RI nach Salzsprühtest (72h), verzinktes Stahlblech |
|---|---|---|---|---|---|
| Beispiel 17 (aus Bsp. 12) | 4,5 | 3,5 | 3 | 6 | 4 |
| Beispiel 18 (aus Bsp. 13) | 5 | 3 | 3,5 | 6 | 5 |
| Beispiel 19 (aus Bsp. 14) | 6 | 4 | 3,5 | 7,5 | 5,5 |
| Beispiel 20 (aus Bsp. 15) | 5,5 | 4 | 4 | 8 | 5 |
| Beispiel 21 (aus Bsp. 16) | 6 | 4 | 5 | 9 | 4,5 |
| Beispiel 22 (aus Bsp. 11, Vergleich) | 2,5 | 1,5 | 1,5 | 3,5 | 1,5 |

Der Korrosionsschutz der Bleche wird durch die Verwendung der oxidischen Nanopartikel in Kombination mit einem polykationischen Polymer eindeutig erhöht. Dies ist unabhängig von der Art der Teilchen (Siliziumdioxid, modifiziert und unmodifiziert sowie Zinkoxid) und vom Auftragungsmittel. Die Erfindung lässt sich auch in bereits zum Schutz von Oberflächen bekannten Systemen wie Lacken einsetzen und trägt zu einer weiteren Erhöhung der Korrosionsschutzwirkung derartiger Beschichtungen bei.

## Patentansprüche

1. Verwendung von oxidischen Nanopartikeln mit einer mittleren Teilchengröße von 2 bis 2000 nm (a) in Kombination mit mindestens einem polykationischen Polymer (b) zum Schutz von metallischen Oberflächen vor Korrosion.

2. Verwendung nach Anspruch 1, **dadurch gekennzeichnet, dass** das Zeta-Potential der oxidischen Nanopartikel (a) in Gegenwart des mindestens einen polykationischen Polymers (b) im pH-Wert-Bereich von 4 bis 13 mindestens -2 ist, gemessen in wässriger Phase bei 25°C.

3. Verwendung nach Anspruch 1 oder 2, **dadurch gekennzeichnet, dass** das Gewichtsverhältnis des mindestens einen polykationischen Polymeren (b) zu oxidischen Nanopartikeln (a) bei 1:1000 bis 1:1 liegt.

4. Verwendung nach einem der Ansprüche 1 bis 3, **dadurch gekennzeichnet, dass** die oxidischen Nanopartikel (a) ausgewählt sind aus Siliziumdioxid, Eisenoxiden, Zinkoxid, Titandioxid, Zirkoniumdioxid, Tantaloxid, Manganoxiden sowie Mischoxide und Mischungen davon.

5. Verwendung nach einem der Ansprüche 1 bis 4, **dadurch gekennzeichnet, dass** die oxidischen Nanopartikel (a) hydrophob modifiziert sind.

6. Verwendung nach einem der Ansprüche 1 bis 5, **dadurch gekennzeichnet, dass** das mindestens eine polykationische Polymer (b) ausgewählt ist aus Polyaminen, Polyiminen, Polyamiden, Polydiallyldimethylammoniumchlorid, Polyvinylamin, Polyvinylpyridin, Polyvinylimidazol und Polyvinylpyrrolidon sowie natürlichen und halbsynthetischen Polymeren einschließlich kationisch modifizierter Stärke und Mischungen davon.

7. Verwendung nach einem der Ansprüche 1 bis 6, **dadurch gekennzeichnet, dass** das mindestens eine polykationische Polymer (b) Polyethylenimin ist.

8. Verwendung nach einem der Ansprüche 1 bis 7, **dadurch gekennzeichnet, dass** das mindestens eine polykationische Polymer (b) ein zahlengemitteltes Molekulargewicht von 500 g/mol bis 2 000 000 g/mol aufweist.

9. Verwendung nach einem der Ansprüche 1 bis 8, **dadurch gekennzeichnet, dass** das mindestens eine polykationische Polymer (b) ein Dendrimer ist.

10. Verwendung nach einem der Ansprüche 1 bis 9, **dadurch gekennzeichnet, dass** die oxidischen Nanopartikel (a) und das mindestens eine polykationische Polymer (b) in einem Auftragungsmittel in einer Gesamtkonzentration von mindestens 0,1 Gew.-%, bezogen auf die Gesamtmenge von (a), (b) und Auftragungsmittel, eingesetzt werden.

11. Verfahren zum Schutz von metallischen Oberflächen vor Korrosion, umfassend die Schritte:
i) Bereitstellen einer Formulierung enthaltend oxidische Nanopartikel (a) und mindestens ein polykationisches Polymer (b) wie in einem der Ansprüche 1 bis 10 definiert und ein Auftragungsmittel,
ii) Aufbringen der Formulierung auf die zu schützende metallische Oberfläche und
iii) ggf. Trocknen und/oder Wärmebehandlung der Oberfläche.

12. Metallische Oberflächen, die mit oxidischen Nanopartikeln (a) in Kombination mit Mindestens einem polykationischen Polymer (b) wie in einem der Ansprüche 1 bis 10 definiert vor Korrosion geschützt sind, herstellbar gemäß dem Verfahren nach Anspruch 11.

13. Korrosionsschutzmittel enthaltend:
0,1 bis 3 Gew.-% oxidische Nanopartikel mit einer mittleren Teilchengröße von 2 bis 2 000 nm (a) und mindestens ein polykationisches Polymer (b) wie in einem der Ansprüche 1 bis 10 definiert, wobei das Gewichtsverhältnis von (b) zu (a) bei 1:1000 bis 1:1 liegt,
0,1 bis 30 Gew.-% mindestens einen Emulgators,
5 bis 90 Gew.-% flüssiges Dispersionsmedium,
0 bis 5 Gew.-% mindestens ein anorganisches Salz ausgewählt aus Phosphaten oder Fluoriden von Li, Na, K, Mg, Ca, Ba, Zn, Mn, Fe, Ti und/oder Zr,
bezogen auf die Gesamtmenge des Korrosionsschutzmittels.

14. Korrosionsschutzmittel gemäß Anspruch 13, **dadurch gekennzeichnet, dass** die oxidischen Nanopartikel (a) Siliziumdioxid sind und das mindestens eine polykationische Polymer (b) Polyethylenimin ist.

## Claims

1. The use of oxidic nanoparticles having an average particle size of 2 to 2000 nm (a) in combination with at least one polycationic polymer (b) for protecting metallic surfaces from corrosion.

2. The use according to claim 1, wherein the zeta potential of the oxidic nanoparticles (a) in the presence of said at least one polycationic polymer (b) in the pH range from 4 to 13 is at least -2, measured in aqueous phase at 25°C.

3. The use according to claim 1 or 2, wherein the weight ratio of said at least one polycationic polymer (b) to oxidic nanoparticles (a) is 1:1000 to 1:1.

4. The use according to any of claims 1 to 3, wherein the oxidic nanoparticles (a) are selected from silicon dioxide, iron oxides, zinc oxide, titanium dioxide, zirconium dioxide, tantalum oxide, manganese oxides, and also mixed oxides, and mixtures thereof.

5. The use according to any of claims 1 to 4, wherein the oxidic nanoparticles (a) are hydrophobically modified.

6. The use according to any of claims 1 to 5, wherein said at least one polycationic polymer (b) is selected from polyamines, polyamines, polyamides, polydiallyldimethylammonium chloride, polyvinyl-amine, polyvinylpyridine, polyvinylimidazole, and polyvinylpyrrolidone, and also natural and semisynthetic polymers, including cationically modified starch, and mixtures thereof.

7. The use according to any of claims 1 to 6, wherein said at least one polycationic polymer (b) is polyethylenimine.

8. The use according to any of claims 1 to 7, wherein said at least one polycationic polymer (b) has a number-average molecular weight of 500 g/mol to 2 000 000 g/mol.

9. The use according to any of claims 1 to 8, wherein said at least one polycationic polymer (b) is a dendrimer.

10. The use according to any of claims 1 to 9, wherein the oxidic nanoparticles (a) and said at least one polycationic polymer (b) are used in an application medium in a total concentration of at least 0.1% by weight, based on the total amount of (a), (b), and application medium.

11. A method of protecting a metallic surface from corrosion, comprising the steps of:
i) providing a formulation comprising oxidic nanoparticles (a) and at least one polycationic polymer (b) as defined in claims 1 to 10 and an application medium,
ii) applying the formulation to the metallic surface that is to be protected, and
iii) optionally drying and/or heat-treating the surface.

12. A metallic surface protected from corrosion with oxidic nanoparticles (a) in combination with at least one polycationic polymer (b) as defined in any of claims 1 to 10, which can be produced by the method according to claim 11.

13. A corrosion protection composition comprising:
0.1% to 3% by weight of oxidic nanoparticles having an average particle size of 2 to 2000 nm (a) and at least one polycationic polymer (b) as defined in any of claims 1 to 10, the weight ratio of (b) to (a) being 1:1000 to 1:1,
0.1% to 30% by weight of at least one emulsifier,
5% to 90% by weight of liquid dispersion medium,
0 to 5% by weight of at least one inorganic salt selected from phosphates or fluorides of Li, Na, K, Mg, Ca, Ba, Zn, Mn, Fe, Ti and/or Zr,
based on the total amount of the corrosion protection composition.

14. The corrosion protection composition according to claim 13, wherein the oxidic nanoparticles (a) are silicon dioxide and said at least one polycationic polymer (b)is polyethylenimine.

## Revendications

1. Utilisation de nanoparticules oxydiques ayant une taille de particule moyenne de 2 à 2 000 nm (a) en combinaison avec au moins un polymère polycationique (b) pour la protection de surfaces métalliques contre la corrosion.

2. Utilisation selon la revendication 1, **caractérisée en ce que** le potentiel zêta des nanoparticules oxydiques (a) en présence du ou des polymères polycationiques (b) dans la plage de pH allant de 4 à 13 est d'au moins -2, mesuré en phase aqueuse à 25 °C.

3. Utilisation selon la revendication 1 ou 2, **caractérisée en ce que** le rapport en poids entre le ou les polymères polycationiques (b) et les nanoparticules oxydiques (a) est de 1:1 000 à 1:1.

4. Utilisation selon l'une quelconque des revendications 1 à 3, **caractérisée en ce que** les nanoparticules oxydiques (a) sont choisies parmi le dioxyde de silicium, les oxydes de fer, l'oxyde de zinc, le dioxyde de titane, le dioxyde de zirconium, l'oxyde de tantale, les oxydes de manganèse, ainsi que les oxydes mixtes et leurs mélanges.

5. Utilisation selon l'une quelconque des revendications 1 à 4, **caractérisée en ce que** les nanoparticules oxydiques (a) sont modifiées hydrophobiquement.

6. Utilisation selon l'une quelconque des revendications 1 à 5, **caractérisée en ce que** le ou les polymères polycationiques (b) sont choisis parmi les polyamines, les polyimines, les polyamides, le polychlorure de diallyldiméthylammonium, la polyvinylamine, la polyvinylpyridine, le polyvinylimidazole et la polyvinylpyrrolidone, ainsi que les polymères naturels et semi-synthétiques, y compris l'amidon modifié cationiquement, et leurs mélanges.

7. Utilisation selon l'une quelconque des revendications 1 à 6, **caractérisée en ce que** le ou les polymères polycationiques (b) sont la polyéthylène-imine.

8. Utilisation selon l'une quelconque des revendications 1 à 7, **caractérisée en ce que** le ou les polymères polycationiques (b) présentent un poids moléculaire moyen en nombre de 500 g/mol à 2 000 000 g/mol.

9. Utilisation selon l'une quelconque des revendications 1 à 8, **caractérisée en ce que** le ou les polymères polycationiques (b) sont un dendrimère.

10. Utilisation selon l'une quelconque des revendications 1 à 9, **caractérisée en ce que** les nanoparticules oxydiques (a) et le ou les polymères polycationiques (b) sont utilisés dans un agent d'application en une concentration totale d'au moins 0,1 % en poids, par rapport à la quantité totale de (a), (b) et l'agent d'application.

11. Procédé de protection de surfaces métalliques contre la corrosion, comprenant les étapes suivantes :
i) la préparation d'une formulation contenant des nanoparticules oxydiques (a) et au moins un polymère polycationique (b) tel que défini dans l'une quelconque des revendications 1 à 10 et un agent d'application,
ii) l'application de la formulation sur la surface métallique à protéger et
iii) éventuellement le séchage et/ou le traitement thermique de la surface.

12. Surfaces métalliques, qui sont protégées contre la corrosion avec des nanoparticules oxydiques (a) en combinaison avec au moins un polymère polycationique (b) tel que défini dans l'une quelconque des revendications 1 à 10, pouvant être fabriquées par le procédé selon la revendication 11.

13. Agent anticorrosion, contenant :
0,1 à 3 % en poids de nanoparticules oxydiques ayant une taille de particule moyenne de 2 à 2 000 nm (a) et au moins un polymère polycationique (b) tel que défini dans l'une quelconque des revendications 1 à 10, le rapport en poids de (b) sur (a) étant de 1:1 000 à 1:1,
0,1 à 30 % en poids d'au moins un émulsifiant,
5 à 90 % en poids d'un milieu de dispersion liquide,
0 à 5 % en poids d'au moins un sel inorganique choisi parmi les phosphates ou les fluorures de Li, Na, K, Mg, Ca, Ba, Zn, Mn, Fe, Ti et/ou Zr,
par rapport à la quantité totale de l'agent anticorrosion.

14. Agent anticorrosion selon la revendication 13, **caractérisé en ce que** les nanoparticules oxydiques (a) sont du dioxyde de silicium et le ou les polymères polycationiques (b) sont la polyéthylène-imine.
